# EUROPEAN PATENT SPECIFICATION

(11) **EP 2 994 001 B1**
(45) Date of publication and mention of the grant of the patent: **06.12.2017**
(21) Application number: 14724688.8
(22) Date of filing: 08.05.2014
(51) Int. Cl.: A41D 13/005, B60N 2/58, B60N 2/56

(54) **FLEXIBLE FABRICS**
FLEXIBLE GEWEBE
TEXTILES EXTENSIBLES

(30) Priority: 08.05.2013 GB 201308272
(43) Date of publication of application: 16.03.2016
(73) Proprietor: Osmotex AG, 6055 Alpnach Dorf (CH)
(72) Inventor: VOLDEN, Tormod, 6003 Lucerne (CH); HELDAL, Trond, 6006 Lucerne (CH)
(74) Representative: Piésold, Alexander James
(86) International application number: PCT/EP2014/059467
(87) International publication number: WO 2014/180956

(56) References cited:
- EP-A1- 0 993 328
- WO-A1-2009/024779

## Description

The invention relates to flexible fabrics, such as textiles.

EP 0993328 describes the technology of electric humidity transport in textiles. In typical embodiments, a special membrane for electroosmotic (EO) moisture transport is sandwiched or laminated between two porous conductive layers. By applying a small electric potential difference between the conductive layers, fast humidity transport is induced in the porous membrane. The three layer structure could constitute the fabric of a jacket, jumper, car-seat or other.

Electrical heating in sports, leisure and professional clothing brings several advantages. The heating makes it possible to keep the wearer warm with much thinner insulating layers than would otherwise be required. This increases the comfort and flexibility. More important for many applications, it allows for better ventilation and breathability. During periods of high activity, the wearer can turn off the heating and avoid overheating caused by excessive thermal insulation. In periods of rest or low activity, the heating system can be turned on. An example would be a skier who goes downhill after first enduring a strenuous climb.

Whereas many companies offer textiles with resistive heating, WO 2009/024779 describes a combined heating and electroosmotic humidity transport functionality by applying a second electric contact to one of the conductive layers in a laminate for electroosmotic transport. This makes it possible not only to run an electric current through the porous electroosmotic membrane, to provide liquid transport, but also along one of the conductive layers, thereby inducing resistive heating. The document discloses that these functions can be carried out individually or, where both liquid transport and resistive heating are carried out at the same time, the liquid is transported towards the heated conductive layer which then assists in the evaporation of the transported liquid.

According to a first aspect the invention provides a method of increasing energy efficiency of a flexible fabric which is to be heated, the flexible fabric comprising a heating layer which is conductive, a first conductive layer, a second conductive layer and an electroosmotic liquid transport layer between the heating layer and one of the conductive layers, the method comprising supplying electric power to the heating layer to heat it, and applying an electric field to the electroosmotic liquid transport layer to transport liquid away from the heating layer towards said one of the conductive layers.

The electric field may be applied to the electroosmotic liquid transport layer by providing a potential difference between the heating layer and said one of the conductive layers, or between the first conductive layer and a second conductive layer. A circuit may be used to provide the potential difference, for example by outputting a signal.

Electroosmosis makes it possible to transport water at an energy consumption of just one or a few Wh/litre (i.e., a few Watts to transport one litre of water during one hour). Removing water by evaporation, on the other hand, requires an energy determined by the enthalpy of evaporation of water which is 40.65 kJ/mol. This translates into 500 Wh/litre for evaporative humidity removal.

The energy needed to evaporate water has appeared to be a big challenge for electrically heated garments and other devices. Often designed for high physical activity during sports or work, the heat element (often removable and washable) will typically be wetted by perspiration and condensation water. It could also be thoroughly wetted by rain or water spillage. Therefore, even during normal use, a large amount of energy is consumed by evaporating water from the resistive heater and heat element. As the garments are powered by a battery, this severely reduces the time between each battery charging - a critical factor in the usability of heatable garments and other portable devices (including wheelchairs). For example, in work clothing the battery duration should cover at least one 8 hour shift. In sports clothing it is highly dependent on the exact application, but a durability covering one day in the ski slopes or even trekking for several days would be highly desirable. Current battery lifetime is typically 2-4 hours.

One option might be to use a larger battery, but this has the following important drawbacks:
- Large increase in cost (price increases non-linearly with capacity)
- Longer charging times
- Heavier

Therefore, it is not a desirable solution to the challenge.

One might seal the heating element with a water impermeable film. However, the evaporation would still take place at the surface of the film - unless it is placed too far away to create good heating of the wearer. The impermeable film would also reduce breathability of the clothing system, thereby making it uncomfortable and physiologically problematic.

The inventors of the present invention have realized that electroosmotic liquid transport could be used as an alternative means of removing humidity from a heating layer. While its breathability and warm surface would be preserved, it could strongly reduce the system power consumption, thereby enhancing the battery life time by a large factor.

In the operation of the flexible fabric according to the invention electroosmosis is used to transport liquid away from the heating layer. The tendency for evaporating liquid to cool the heating layer, and hence require a higher input of energy from a battery to effect heating, for example of a garment including the flexible fabric, can be reduced. The liquid, once transported away from the heating layer, may run off as a liquid, or if it is carried sufficiently far away from the heating layer it may be allowed to evaporate with a reduced tendency to cool the heating layer.

The electroosmotic transport of liquid may be used to keep the heating layer dry. Such dryness may be maintained in relation to background humidity, or in relation to a source of moisture during use of the flexible fabric, such as perspiration from a user or rainwater.

Considering an example, a battery having a capacity of 2.2 ampere-hours supplied at a voltage of 7.4 volts can provide 16 Watt-hours of energy. In the dry state, the battery could provide e.g. 2W of heating for 8 hours. If this energy was used to evaporate 0.02 litres of water this would involve energy usage of 10 watt-hours, and this would reduce the duration of energy supplied by the battery from 8 hours to 3 hours.

In certain embodiments the electric field is applied to the electroosmotic liquid transport layer to transport liquid away from the heating layer at the same time as electric power is supplied to the heating layer to heat it. Alternatively or additionally, the electric field may be applied to the electroosmotic liquid transport layer to transport liquid away from the heating layer and thereby effect drying thereof prior to the electric power being supplied to the heating layer to heat it.

The flexible fabric used in the method may comprise a circuit configured to:
A. apply the electric field to the electroosmotic liquid transport layer to transport liquid away from the heating layer at the same time as supplying electric power to the heating layer to heat it; and/or
B. apply the electric field to the electroosmotic liquid transport layer to transport liquid away from the heating layer and thereby effect drying thereof prior to supplying the electric power being supplied to the heating layer to heat it.

According to a preferred aspect of the invention, there is provided apparatus comprising the flexible fabric and a circuit for supplying electric power to the heating layer to heat it and for applying an electric field to the electroosmotic liquid transport layer to transport liquid away from the heating layer, the circuit being configured to:
A. apply the electric field to the electroosmotic liquid transport layer to transport liquid away from the heating layer at the same time as supplying electric power to the heating layer to heat it; and/or
B. apply the electric field to the electroosmotic liquid transport layer to transport liquid away from the heating layer and thereby effect drying thereof prior to supplying the electric power being supplied to the heating layer to heat it.

By applying the electric field to the electroosmotic liquid transport layer to transport liquid away from the heating layer at the same time as electric power is supplied to the heating layer to heat it, it is possible to minimise the use of energy in evaporating the liquid and to conserve that energy instead for providing a heating effect.

By applying the electric field to the electroosmotic liquid transport layer to transport liquid away from the heating layer and thereby effect drying thereof prior to the electric power being supplied to heating layer to heat it, the heating layer may be dried before heating commences, thereby minimising the use of energy to evaporate moisture once heating begins.

The liquid transport may be effected both prior to and during heating, or it may be effected only during heating and not prior thereto, or it may be effected only prior to heating. The precise method will depend on the circumstances.

In the case of the electric field being applied to the electroosmotic liquid transport layer prior to heating, the electric field may be applied during a period of one, two, three, four, five, six, seven, eight, nine or ten minutes prior to commencing heating. Generally, the drying out of the heating layer should be carried out prior to heating and without there being sufficient time for moisture to build up in the region of the heating layer, for example due to ambient humidity.

The flexible fabric may comprise a porous layer between the heating layer and the electroosmotic liquid transport layer. The porous layer can serve to separate the heating layer from the region to which liquid is transported by electroosmotic liquid transport. Therefore, if the liquid then evaporates it can be spaced apart from the heating layer and this will reduce the opportunity for evaporative cooling of the heating layer to take place. Instead, the water might run off on either side of the heating layer.

The porous layer may be thicker than the electroosmotic liquid transport layer. The benefit of a thicker porous layer is an increased spacing of the electroosmotic liquid transport layer from the heating layer, enhancing the ability to avoid evaporative cooling having a cooling effect on the heating layer.

The porous layer may comprise a plurality of sub-layers.

The porous layer may be a porous polymer grid, textile, non-woven material, foam or membrane. If the porous layer is comprised of a plurality of sub-layers, then each sub-layer may be made of similar material or the sub-layers may be made of different materials.

The flexible fabric comprises a second conductive layer. In effect there are three layers which are electrically conductive, namely a conductive heating layer and first and second further conductive layers. The use of first and second conductive layers may increase the opportunity to remove liquid from the heating layer and thereby save energy.

In certain embodiments the heating layer is disposed between the first conductive layer and the second conductive layer, said electroosmotic liquid transport layer is disposed between the heating layer and the first conductive layer, and a second electroosmotic liquid transport layer is disposed between said heating layer and the second conductive layer. With such an arrangement an electric field may be set up between the heating layer and the first conductive layer, acting across the electroosmotic liquid transport layer, to transport liquid away from the heating layer. An electric field may be set up between the heating layer and the second conductive layer, acting across the second electroosmotic transport layer to transport liquid away from the heating layer. Therefore, liquid may be transported in mutually opposite directions away from the heating layer. This may improve the drying effect.

In certain embodiments, the heating layer is disposed on one side of the two conductive layers, and said electroosmotic liquid transport layer is disposed between the two conductive layers. With such an arrangement, an electric field may be set up between the first and second conductive layers, across the electroosmotic liquid transport layer disposed therebetween, in order to transport liquid in a direction away from the heating layer. This arrangement may be useful in that an existing design of heatable flexible fabric may be modified by the addition of further layers, namely the first and second conductive layers and the electroosmotic liquid transport layer therebetween.

According to a second aspect the invention provides a flexible fabric comprising a heating layer which is conductive and is arranged to generate heat when electric power is applied thereto, a first conductive layer, and an electroosmotic liquid transport layer arranged for electroosmotic transport of liquid away from the heating layer, characterised in that the flexible fabric comprises a second conductive layer, in that said electroosmotic liquid transport layer is between the heating layer and one of the conductive layers, and in that said elecroosmotic liquid transport layer is arranged for electroosmotic transport of liquid away from the heating layer and towards said one of the conductive layers.

The electric field may be applied to the electroosmotic liquid transport layer by providing a potential difference between the heating layer and said one of the conductive layers, or between the first conductive layer and the second conductive layer. A circuit may be used to provide the potential difference, for example by outputting a signal.

In certain embodiments the heating layer is disposed between the first and second conductive layers, said electroosmotic liquid transport layer is disposed between the heating layer and the first conductive layer, and a second electroosmotic liquid transport layer is disposed between the heating layer and the second conductive layer.

In certain embodiments the heating layer is disposed on one side of the first and second conductive layers, and said electroosmotic liquid transport layer is disposed between the first and second conductive layers.

The electroosmotic liquid transport layer will generally be porous, in order to allow liquid transport therethrough. It may be a porous membrane. It may be made of a polymer, such as polyester or polyethylene. The electroosmotic liquid transport layer may be made of an inorganic material, such as glass fibre.

In general, the heating layer is arranged to allow vapour or liquid therethrough. It is generally desired that it will not significantly inhibit breathability of the flexible fabric. The heating layer may therefore be porous. It may for example be a carbon cloth or a steel filament textile, or a metal wire following a tortuous path in the plane of the flexible fabric.

In general, the conductive layers are arranged to allow vapour or liquid therethrough. It is generally desired that they will not significantly inhibit breathability of the flexible fabric. The heating layer may therefore be porous. It may for example be a carbon cloth or a steel filament textile, or a coating on another layer, for example the electroosmotic liquid transport layer.

The heating layer may have terminals for connection into the circuit. The circuit preferably has an electric power supply, such as a battery, e.g. a lithium-ion battery.

Certain preferred embodiments of the invention will now be described by way of example and with reference to the accompanying drawings, in which:
Figure 1 is a schematic cross-sectional view of a first embodiment of flexible fabric; and
Figure 2 is a schematic cross-sectional view of a second embodiment of flexible fabric.

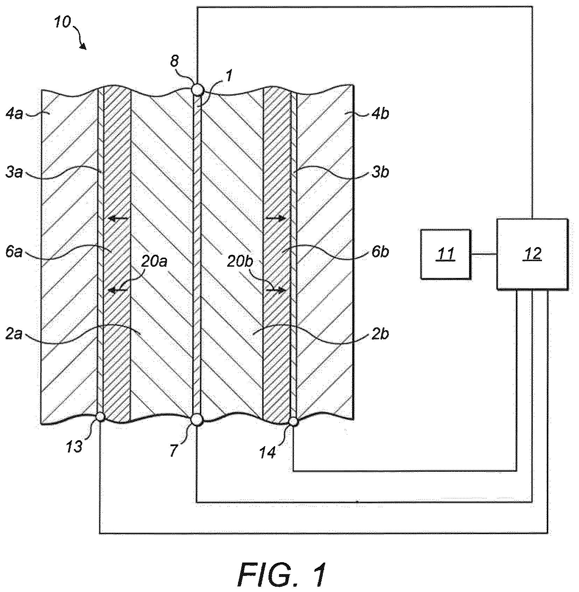

Figure 1 shows a flexible fabric 10 comprising a conductive heating layer 1, which may for example be a steel mesh or a plurality of wire elements, or a tortuous metal wire in a supporting membrane. First and second porous conductive layers 3a and 3b are provided outwardly of the heating layer 1. On one side of the heating layer 1 a first porous conductive layer 3a is provided, and on the other side of the heating layer 1 a second porous conductive layer 3b is provided. The porous conductive layers 3a, 3b may each be a steel mesh or a plurality of wire elements, or they may each be a metal coating on an electroosmotic liquid transport layer, or a combination of coating and wire elements, for example. An electroosmotic liquid transport layer 6a is provided inwardly adjacent to the porous conductive layer 3a, and outwardly of the heating layer 1. An electroosmotic liquid transport layer 6b is provided inwardly adjacent to the porous conductive layer 3b, and outwardly of the heating layer 1. Between the heating layer 1 and the electroosmotic liquid transport layer 6a one or more further layers 2a is or are provided optionally. Between the heating layer 1 and the electroosmotic liquid transport layer 6b one or more further layers 2b is or are provided. The layers 2a, 2b may for example comprise a foam or a textile. Outwardly of the porous conductive layer 3a an outer layer 4a is provided. Outwardly of the porous conductive layer 3b an outer layer 4b is provided.

An electric circuit is provided to operate the flexible fabric. Apparatus comprising the flexible fabric and the electric circuit is thus provided.

A battery 11 supplies power to a control unit 12. The control unit is arranged to supply electric power for heating heating layer 1 via terminals 7 and 8, in order to heat the heating layer. A current may flow along the heating layer 1. The control unit 12 is arranged to supply a signal to the first porous conductive layer 3a via a terminal 13, and is arranged to supply a signal to the second porous conductive layer 3b via a terminal 14. The signals supplied to conductive layers 3a and 3b are such as to provide a potential difference between each of these layers and the heating layer 1, so as to create an electric field across the respective electroosmotic liquid transport layers 6a and 6b, whereby liquid is transported in a direction away from the heating layer 1 by electroosmosis. Liquid is transported away from the heating layer 1 through electroosmotic liquid transport layer 6a towards conductive layer 3a in the direction shown by arrow 20a. Liquid is transported away from the heating layer 1 through electroosmotic liquid transport layer 6b towards conductive layer 3b in the direction shown by arrow 20b.

An alternating voltage (AC signal) might be applied to the conductive layers 3a and 3b to effect EO moisture removal at each layer. This could be relevant at a time when there is not much humidity in layers adjacent to the heating layer on each side thereof, but nevertheless with humidity accumulated in the heating layer. For example, textile humidity sensors could be used to established when this is the case. By applying the AC voltage, moisture would be removed from the heating layer and carried towards each of layers 3a and 3b in opposite pulses of the electric signal, the moisture being supplied to the said layers by a combination of diffusion and electroosmotic transport (the ratio between which would be determined by the signal frequency and system parameters).

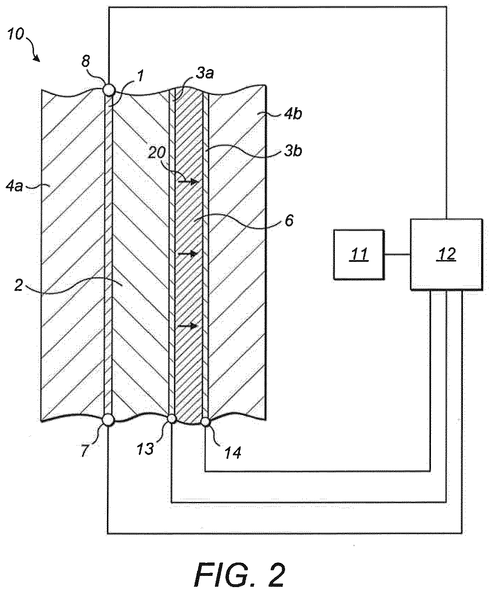

The embodiment of Figure 2 has similar layers to that of Figure 1, except that the porous conductive layers 3a, 3b are both arranged on one side of the heating layer, rather than the heating layer being arranged between the non-heating porous conductive layers. The flexible fabric 10 of Figure 2 has a porous conductive layer 1 forming a heating layer. It has a pair of porous conductive layers 3a and 3b to one side of the heating layer 1. Between the pair of non-heating porous conductive layers 3a, 3b, an electroosmotic liquid transport layer 6 is provided. Between the heating layer 1 and the porous conductive layer 3a one or more further layers 2 is or are provided. The layer 2 may for example comprise a foam or a textile and is optional. Outwardly of the heating layer 1 an outer layer 4a is provided. Outwardly of the porous conductive layer 3b an outer layer 4b is provided. Thus outer layers are provided outwardly of the plurality of conductive layers, on each side thereof.

The structure consisting of layers 3a, 3b and 6 is shown at one side of the heating layer 1. In another embodiment, similar layers are provided on both sides of the heating layer.

An electric circuit is provided to operate the flexible fabric. Apparatus comprising the flexible fabric and the electric circuit is thus provided.

A battery 11 supplies electric power to a control unit 12. The control unit 12 is connected to the heating layer 1 via respective terminals 7 and 8, in order to heat the heating layer. A current may flow along the heating layer. The control unit 12 is connected to the first porous conductive layer 3a via terminal 13. The control unit is connected to the second porous conductive layer 3b via a terminal 14. A signal is supplied to terminals 13 and 14 to provide a potential difference across the electroosmotic liquid transport layer 6, in order to effect liquid transport in a direction away from the heating layer 1 as shown by arrow 20.

The electroosmotic liquid layers and the conductive layers used in the various embodiments of the invention may be based on those known from EP 0993328, WO 2009/024779 or WO 2013/026829. The heating layer may be as described in WO 2009/024779.

In embodiments of the invention, moisture in a region around the heating layer, caused for example by ambient humidity, may be carried away from the heating layer by electroosmosis. Moisture which is outside of the immediate vicinity of the heating layer, for example in the outer textile layers 4, arriving for example as perspiration or rainwater, may start to travel towards the heating layer by diffusion or capillary action. However, the effect of the electroosmotic liquid transport action of the flexible fabric will tend to cause the moisture to be turned round and repelled from the heating layer. It will be seen therefore that there are benefits in relation to both ambient humidity levels and local increases in humidity caused by the circumstances of the use of the flexible fabric.

## Claims

1. A method of increasing energy efficiency of a flexible fabric (10) which is to be heated, the flexible fabric comprising a heating layer (1) which is conductive, a first conductive layer (3a), a second conductive layer (3b), and an electroosmotic liquid transport layer (6, 6a, 6b) between the heating layer (1) and one of the conductive layers (3a, 3b), the method comprising supplying electric power to the heating layer (1) to heat it, and applying an electric field to the electroosmotic liquid transport layer to transport liquid away from the heating layer towards said one of the conductive layers (3a, 3b).

2. A method as claimed in claim 1, wherein the electric field is applied to the electroosmotic liquid transport layer (6, 6a, 6b) to transport liquid away from the heating layer (1) at the same time as electric power is supplied to the heating layer to heat it.

3. A method as claimed in claim 1 or 2, wherein the electric field is applied to the electroosmotic liquid transport layer (6, 6a, 6b) to transport liquid away from the heating layer (1) and thereby effect drying thereof prior to the electric power being supplied to the heating layer to heat it.

4. A method as claimed in claim 1, 2 or 3, wherein the flexible fabric comprises a porous layer (2, 2a, 2b) between the heating layer (1) and the electroosmotic liquid transport layer (6, 6a, 6b).

5. A method as claimed in claim 4, wherein the porous layer (2, 2a, 2b) is thicker than the electroosmotic liquid transport layer (6, 6a, 6b).

6. A method as claimed in claim 4 or 5, wherein the porous layer (2, 2a, 2b) comprises a plurality of sub-layers.

7. A method as claimed in any of claims 1 to 6, wherein the heating layer (1) is disposed between the first conductive layer (3a) and the second conductive layer (3b), and wherein said electroosmotic liquid transport layer (6a) is disposed between the heating layer (1) and the first conductive layer (3a), and a second electroosmotic liquid transport layer (6b) is disposed between said heating layer and the second conductive layer (3b).

8. A method as claimed in any of claims 1 to 6, wherein the heating layer (1) is disposed on one side of the two conductive layers (3a, 3b), and wherein said electroosmotic liquid transport layer (6) is disposed between the two conductive layers.

9. A flexible fabric (10) comprising a heating layer (1) which is conductive and is arranged to generate heat when electric power is applied thereto, a first conductive layer (3a), and an electroosmotic liquid transport layer (6, 6a, 6b) arranged for electroosmotic transport of liquid away from the heating layer (1), **characterised in that** the flexible fabric (10) comprises a second conductive layer (3b), **in that** said electroosmotic liquid transport layer is between the heating layer and one of the conductive layers (3a, 3b), and **in that** said elecroosmotic liquid transport layer (6, 6a, 6b) is arranged for electroosmotic transport of liquid away from the heating layer (1) and towards said one of the conductive layers (3a, 3b).

10. A flexible fabric as claimed in claim 9, wherein the heating layer is disposed between the first and second conductive layers (3a, 3b), and wherein said electroosmotic liquid transport layer (6a) is disposed between the heating layer (1) and the first conductive layer (3a), and a second electroosmotic liquid transport layer (6b) is disposed between the heating layer and the second conductive layer (3b).

11. A flexible fabric as claimed in claim 9, wherein the heating layer (1) is disposed on one side of the first and second conductive layers (3a, 3b), and wherein said electroosmotic liquid transport layer (6) is disposed between the first and second conductive layers (3a, 3b).

12. A flexible fabric as claimed in claim 9, 10 or 11, wherein the flexible fabric comprises a porous layer (2, 2a, 2b) between the heating layer (1) and the electroosmotic liquid transport layer (6, 6a, 6b).

13. A flexible fabric as claimed in claim 12, wherein the porous layer (2, 2a, 2b) is thicker than the electroosmotic liquid transport layer (6, 6a, 6b).

14. A flexible fabric as claimed in claim 12 or 13, wherein the porous layer (2, 2a, 2b) comprises a plurality of sub-layers.

15. Apparatus comprising a flexible fabric as claimed in any of claims 9 to 14, and comprising a circuit for supplying electric power to the heating layer (1) to heat it and for applying an electric field to the electroosmotic liquid transport layer (6, 6a, 6b) to transport liquid away from the heating layer, the circuit being configured to:
A. apply the electric field to the electroosmotic liquid transport layer (6, 6a, 6b) to transport liquid away from the heating layer at the same time as supplying electric power to the heating layer (1) to heat it; and/or
B. apply the electric field to the electroosmotic liquid transport layer (6, 6a, 6b) to transport liquid away from the heating layer and thereby effect drying thereof prior to supplying the electric power being supplied to the heating layer (1) to heat it.

## Patentansprüche

1. Verfahren zum Steigern der Energieeffizienz eines flexiblen Gewebes (10), das geheizt werden soll, wobei das flexible Gewebe eine Heizschicht (1), die leitend ist, eine erste leitende Schicht (3a), eine zweite leitende Schicht (3b) und eine elektroosmotische Flüssigkeitstransportschicht (6, 6a, 6b) zwischen der Heizschicht (1) und einer der leitenden Schichten (3a, 3b) umfasst, wobei das Verfahren das Zuführen von elektrischer Leistung zu der Heizschicht (1), um sie zu heizen, und das Anlegen eines elektrischen Feldes an die elektroosmotische Flüssigkeitstransportschicht umfasst, um Flüssigkeit von der Heizschicht weg zu der einen der leitenden Schichten (3a, 3b) hin zu transportieren.

2. Verfahren nach Anspruch 1, wobei das elektrische Feld an die elektroosmotische Flüssigkeitstransportschicht (6, 6a 6b) angelegt wird, um Flüssigkeit von der Heizschicht (1) weg zu transportieren, während gleichzeitig der Heizschicht elektrische Leistung zugeführt wird, um sie zu heizen.

3. Verfahren nach Anspruch 1 oder 2, wobei das elektrische Feld an die elektroosmotische Flüssigkeitstransportschicht (6, 6a, 6b) angelegt wird, um Flüssigkeit von der Heizschicht (1) weg zu transportieren und dadurch Trocknen derselben zu bewirken, bevor die elektrische Leistung der Heizschicht zugeführt wird, um sie zu heizen.

4. Verfahren nach Anspruch 1, 2 oder 3, wobei das flexible Gewebe eine poröse Schicht (2, 2a, 2b) zwischen der Heizschicht (1) und der elektroosmotischen Flüssigkeitstransportschicht (6, 6a, 6b) umfasst.

5. Verfahren nach Anspruch 4, wobei die poröse Schicht (2, 2a, 2b) dicker ist als die elektroosmotische Flüssigkeitstransportschicht (6, 6a, 6b).

6. Verfahren nach Anspruch 4 oder 5, wobei die poröse Schicht (2, 2a, 2b) eine Vielzahl von Unterschichten umfasst.

7. Verfahren nach einem der Ansprüche 1 bis 6, wobei die Heizschicht (1) zwischen der ersten leitenden Schicht (3a) und der zweiten leitenden Schicht (3b) angeordnet ist, und wobei die elektroosmotische Flüssigkeitstransportschicht (6a) zwischen der Heizschicht (1) und der ersten leitenden Schicht (3a) angeordnet ist, und eine zweite elektroosmotische Flüssigkeitstransportschicht (6b) zwischen der Heizschicht und der zweiten leitenden Schicht (3b) angeordnet ist.

8. Verfahren nach einem der Ansprüche 1 bis 6, wobei die Heizschicht (1) auf einer Seite der zwei leitenden Schichten (3a, 3b) angeordnet ist, und wobei die elektroosmotische Flüssigkeitstransportschicht (6) zwischen den zwei leitenden Schichten angeordnet ist.

9. Flexibles Gewebe (10), das eine Heizschicht (1), die leitend ist und dazu eingerichtet ist, Hitze zu erzeugen, wenn elektrische Leistung an dieselbe angelegt wird, eine erste leitende Schicht (3a) und eine elektroosmotische Flüssigkeitstransportschicht (6, 6a, 6b) umfasst, die zum elektroosmotischen Transport von Flüssigkeit von der Heizschicht (1) weg eingerichtet ist, **dadurch gekennzeichnet, dass** das flexible Gewebe (10) eine zweite leitende Schicht (3b) umfasst, dadurch, dass sich die elektroosmotische Flüssigkeitstransportschicht zwischen der Heizschicht und einer der leitenden Schichten (3a, 3b) befindet, und dadurch, dass die elektroosmotische Flüssigkeitstransportschicht (6, 6a, 6b) zum elektroosmotischen Transport von Flüssigkeit von der Heizschicht (1) weg und zu einer der leitenden Schichten (3a, 3b) hin eingerichtet ist.

10. Flexibles Gewebe nach Anspruch 9, wobei die Heizschicht zwischen der ersten und zweiten leitenden Schicht (3a, 3b) angeordnet ist, und wobei die elektroosmotische Flüssigkeitstransportschicht (6a) zwischen der Heizschicht (1) und der ersten leitenden Schicht (3a) angeordnet ist, und eine zweite elektroosmotische Flüssigkeitstransportschicht (6b) zwischen der Heizschicht und der zweiten leitenden Schicht (3b) angeordnet ist.

11. Flexibles Gewebe nach Anspruch 9, wobei die Heizschicht (1) auf einer Seite der ersten und zweiten leitenden Schicht (3a, 3b) angeordnet ist, und wobei die elektroosmotische Flüssigkeitstransportschicht (6) zwischen der ersten und zweiten leitenden Schicht (3a, 3b) angeordnet ist.

12. Flexibles Gewebe nach Anspruch 9, 10 oder 11, wobei das flexible Gewebe eine poröse Schicht (2, 2a, 2b) zwischen der Heizschicht (1) und der elektroosmotischen Flüssigkeitstransportschicht (6, 6a, 6b) umfasst.

13. Flexibles Gewebe nach Anspruch 12, wobei die poröse Schicht (2, 2a, 2b) dicker ist als die elektroosmotische Flüssigkeitstransportschicht (6, 6a, 6b).

14. Flexibles Gewebe nach Anspruch 12 oder 13, wobei die poröse Schicht (2, 2a, 2b) eine Vielzahl von Unterschichten umfasst.

15. Vorrichtung, die ein flexibles Gewebe nach einem der Ansprüche 9 bis 14 umfasst, und die eine Schaltung zum Zuführen von elektrischer Leistung zu der Heizschicht (1), um sie zu heizen, und zum Anlegen eines elektrischen Feldes an die elektroosmotische Flüssigkeitstransportschicht (6, 6a, 6b) umfasst, um Flüssigkeit von der Heizschicht weg zu transportieren, wobei die Schaltung dazu ausgebildet ist:
A. das elektrische Feld an die elektroosmotische Flüssigkeitstransportschicht (6, 6a, 6b) anzulegen, um Flüssigkeit von der Heizschicht weg zu transportieren, während gleichzeitig der Heizschicht (1) elektrische Leistung zugeführt wird, um sie zu heizen; und/oder
B. das elektrische Feld an die elektroosmotische Flüssigkeitstransportschicht (6, 6a, 6b) anzulegen, um Flüssigkeit von der Heizschicht weg zu transportieren und dadurch Trocken derselben zu bewirken, vor dem Zuführen der elektrischen Leistung, die der Heizschicht (1) zugeführt wird, um sie zu heizen.

## Revendications

1. Procédé d'augmentation du rendement énergétique d'un tissu souple (10) qui doit être chauffé, le tissu souple comprenant une couche chauffante (1) qui est conductrice, une première couche conductrice (3a), une seconde couche conductrice (3b) et une couche de transport électro-osmotique de liquide (6, 6a, 6b) entre la couche chauffante (1) et une des couches conductrices (3a, 3b), le procédé comprenant la fourniture de courant électrique à la couche chauffante (1) pour la chauffer, et l'application d'un champ électrique à la couche de transport électro-osmotique de liquide pour transporter le liquide loin de la couche chauffante vers ladite une des couches conductrices (3a, 3b).

2. Procédé selon la revendication 1, dans lequel le champ électrique est appliqué à la couche de transport électro-osmotique de liquide (6, 6a, 6b) pour transporter le liquide loin de la couche chauffante (1) en même temps que du courant électrique est fourni à la couche chauffante pour la chauffer.

3. Procédé selon la revendication 1 ou 2, dans lequel le champ électrique est appliqué à la couche de transport électro-osmotique de liquide (6, 6a, 6b) pour transporter du liquide loin de la couche chauffante (1) et pour effectuer de ce fait le séchage de celle-ci avant que le courant électrique ne soit fourni à la couche chauffante pour la chauffer.

4. Procédé selon la revendication 1, 2 ou 3, dans lequel le tissu souple comprend une couche poreuse (2, 2a, 2b) entre la couche chauffante (1) et la couche de transport électro-osmotique de liquide (6, 6a, 6b).

5. Procédé selon la revendication 4, dans lequel la couche poreuse (2, 2a, 2b) est plus épaisse que la couche de transport électro-osmotique de liquide (6, 6a, 6b).

6. Procédé selon la revendication 4 ou 5, dans lequel la couche poreuse (2, 2a, 2b) comprend une pluralité de sous-couches.

7. Procédé selon l'une quelconque des revendications 1 à 6, dans lequel la couche chauffante (1) est disposée entre la première couche conductrice (3a) et la seconde couche conductrice (3b), et dans lequel ladite couche de transport électro-osmotique de liquide (6a) est disposée entre la couche chauffante (1) et la première couche conductrice (3a), et une seconde couche de transport électro-osmotique de liquide (6b) est disposée entre ladite couche de chauffage et la seconde couche conductrice (3b).

8. Procédé selon l'une quelconque des revendications 1 à 6, dans lequel la couche chauffante (1) est disposée sur un côté des deux couches conductrices (3a, 3b), et dans lequel ladite couche de transport électro-osmotique de liquide (6) est disposée entre les deux couches conductrices.

9. Tissu souple (10) comprenant une couche chauffante (1) qui est conductrice et est agencée pour produire de la chaleur quand du courant électrique est appliqué à celle-ci, une première couche conductrice (3a), et une couche de transport électro-osmotique de liquide (6, 6a, 6b) agencée pour le transport électro-osmotique de liquide loin de la couche chauffante (1), **caractérisé en ce que** le tissu souple (10) comprend une seconde couche conductrice (3b), **en ce que** ladite couche de transport électro-osmotique de liquide est entre la couche chauffante et une des couches conductrices (3a, 3b), et **en ce que** ladite couche de transport électro-osmotique de liquide (6, 6a, 6b) est agencée pour le transport électro-osmotique de liquide loin de la couche chauffante (1) et vers ladite une des couches conductrices (3a, 3b).

10. Tissu souple selon la revendication 9, dans lequel la couche chauffante est disposée entre les première et seconde couches conductrices (3a, 3b), et dans lequel ladite couche de transport électro-osmotique de liquide (6a) est disposée entre la couche chauffante (1) et la première couche conductrice (3a), et une seconde couche de transport électro-osmotique de liquide (6b) est disposée entre la couche chauffante et la seconde couche conductrice (3b).

11. Tissu souple selon la revendication 9, dans lequel la couche chauffante (1) est disposée sur un côté des première et seconde couches conductrices (3a, 3b), et dans lequel ladite couche de transport électro-osmotique de liquide (6) est disposée entre les première et seconde couches conductrices (3a, 3b).

12. Tissu souple selon la revendication 9, 10 ou 11, dans lequel le tissu souple comprend une couche poreuse (2, 2a, 2b) entre la couche chauffante (1) et la couche de transport électro-osmotique de liquide (6, 6a, 6b).

13. Tissu souple selon la revendication 12, dans lequel la couche poreuse (2, 2a, 2b) est plus épaisse que la couche de transport électro-osmotique de liquide (6, 6a, 6b).

14. Tissu souple selon la revendication 12 ou 13, dans lequel la couche poreuse (2, 2a, 2b) comprend une pluralité de sous-couches.

15. Appareil comprenant un tissu souple selon l'une quelconque des revendications 9 à 14, et comprenant un circuit pour fournir du courant électrique à la couche chauffante (1) pour la chauffer et pour appliquer un champ électrique à la couche de transport électro-osmotique de liquide (6, 6a, 6b) pour transporter le liquide loin de la couche chauffante, le circuit étant configuré pour :
A. appliquer le champ électrique à la couche de transport électro-osmotique de liquide (6, 6a, 6b) pour transporter du liquide loin de la couche chauffante en même temps que la fourniture de courant électrique à la couche chauffante (1) pour la chauffer ; et/ou
B. appliquer le champ électrique à la couche de transport électro-osmotique de liquide (6, 6a, 6b) pour transporter du liquide loin de la couche chauffante et effectuer de ce fait le séchage de celle-ci avant de fournir le courant électrique fourni à la couche chauffante (1) pour la chauffer.
